# EUROPÄISCHE PATENTSCHRIFT

(11) **EP 0 636 191 B1**
(45) Veröffentlichungstag und Bekanntmachung des Hinweises auf die Patenterteilung: **01.05.1996**
(21) Anmeldenummer: 93903843.6
(22) Anmeldetag: 26.02.1993
(51) Int. Cl.: D06H 7/16

(54) **KURVENSCHNEIDEVORRICHTUNG ZUM SCHNEIDEN EINER TEXTILBAHN UND VERFAHREN ZUM STEUERN DERSELBEN**
CURVE CUTTING DEVICE FOR TEXTILE WEBS AND PROCESS FOR CONTROLLING THE SAME
DISPOSITIF A DECOUPER EN COURBE UNE BANDE TEXTILE ET PROCEDE DE COMMANDE

(30) Priorität: 16.04.1992 DE 4212868; 16.04.1992 DE 4212867
(43) Veröffentlichungstag der Anmeldung: 01.02.1995
(73) Patentinhaber: BIEGGER, Roland, D-86663 Asbach-Bäumenheim (DE)
(72) Erfinder: BIEGGER, Roland, D-86663 Asbach-Bäumenheim (DE)
(74) Vertreter: Schoppe, Fritz, Dipl.-Ing.
(86) Internationale Anmeldenummer: DE9300185
(87) Internationale Veröffentlichungsnummer: WO9321374

(56) Entgegenhaltungen:
- DE-A- 2 359 288
- DE-A- 4 026 250
- DE-U- 9 113 625
- GB-A- 1 015 464
- ELEKTROTECHNISCHE ZEITSCHRIFT, AUSGABE B. Bd. 19B, Nr. 6, 24. M rz 1967, BERLIN DE Seiten 142 - 147 R DER 'Die Steuerung von Brennschneidmaschinen'

## Beschreibung

Die vorliegende Erfindung betrifft ein Verfahren zum Steuern einer Kurvenschneidevorrichtung zum Schneiden einer Textilbahn nach dem Oberbegriff des Patentanspruchs 1 sowie eine Kurvenschneidevorrichtung zum Schneiden einer Textilbahn nach dem Oberbegriff des Patentanspruchs 8.

Allgemein befaßt sich die Erfindung mit dem Schneiden von Textilbahnen mit einer kurvenförmig verlaufenden Abschlußkante. In einem besonderen Anwendungsfall befaßt sich die Erfindung mit dem automatisierten Auszäckeln oder Ausbrennen von Gardinen.

Bestimmte Gardinentypen haben eine kurvenförmig, entlang eines Gardinenmusters verlaufende untere Abschlußkante. Diese wird typischerweise in Handarbeit durch Auszäckeln oder Ausbrennen der Gardinen hergestellt. Hierbei zieht eine Bedienungsperson von Hand eine Gardine derart über einen Tisch mit einem senkrecht zu dem Tisch verlaufenden Glühschneiddraht, daß ein sogenannter Lichtspalt im Muster der Gardine bei der Relativbewegung der Gardine zu dem Glühschneiddraht von dem Glühschneiddraht durchlaufen wird, wodurch sich über den Lichtspalt erstreckende Stege durchtrennt werden. Diese Arbeit ist naturgemäß zeitaufwendig und mühselig.

Aus dem deutschen Gebrauchsmuster 89 07 823.3 ist eine Kurvenschneidevorrichtung der eingangs genannten Art zum automatisierten Auszäckeln oder Ausbrennen von Gardinen bekannt, bei der der Schneidkopf mittels einer Antriebsvorrichtung zum Bewegen des Schneidkopfes senkrecht zur Laufrichtung der Gardine entsprechend der Erfassungssignale einer optoelektronischen Erfassungsvorrichtung hin- und herbewegt wird. Die Erfassungsvorrichtung arbeitet mit einem breiten, im wesentlichen senkrecht zur Ebene der Gardine einfallenden Lichtstrahl, der von einer auf die Gardine an dem gewünschten Schnittort aufgebrachten, reflektierenden Kurvenschnittmarkierung zu einem nicht näher beschriebenen Führungssensor reflektiert wird. Hierdurch sei ein Führungssensor in der Lage, den relativen Ort des Schneidkopfes gegenüber der auf der Gardine aufgebrachten Kurvenschnittmarkierung zu erkennen und den Schneidkopf nachzuführen. Über die Art der Ausgestaltung des Führungssensors ist dieser Schrift nichts zu entnehmen. In jedem Fall ist jedoch diese bekannte Kurvenschneidevorrichtung, soweit diese überhaupt in der Praxis realisierbar sein sollte, auf die Bearbeitung von solchen Textilbahnen oder Gardinentypen beschränkt, bei denen in die Gardine eine reflektierende Markierung eingewebt oder auf diese aufgebracht ist, welche an dem Ort des gewünschten Schnittes zu liegen hat. Bei den meisten Gardinentypen ist das Einweben oder Aufbringen einer derartigen Kurvenschnittmarkierung entweder fertigungstechnisch ausgeschlossen oder aus Kostengründen unerwünscht.

Da das Einweben von reflektierenden Kurvenschnittmarkierungen, wie sie beim Gegenstand des oben gewürdigten deutschen Gebrauchsmusters erforderlich sind, in der Regel nicht in Betracht kommt, wird auch heutzutage das sogenannte Auszäckeln oder Ausbrennen von Gardinen, d. h. das Abtrennen eines Gewebestreifens, der unterhalb der beabsichtigten Abschlußkante einer kurvenförmig verlaufenden Gardine liegt, in Handarbeit durchgeführt.

Eine Automatisierung dieses Musterschneidens galt bislang als nicht möglich.

In der älteren, nicht vorveröffentlichten deutschen Patentanmeldung P 41 36 069.9 des Anmelders ist bereits eine Kurvenschneidevorrichtung beschrieben, die einen Schneidkopf, eine Antriebsvorrichtung zum Bewegen des Schneidkopfes senkrecht zur Laufrichtung der Textilbahn und eine optoelektronische Erfassungsvorrichtung zum Erfassen der Relativlage des Schneidkopfes gegenüber dem Lichtspalt der Textilbahn hat. Die optoelektronische Erfassungsvorrichtung umfaßt drei Lichtschranken, die durch geeignete Signalverknüpfung eine automatische Nachführung des Schneidkopfes gegenüber dem Lichtspalt der Textilbahn ermöglichen. Obwohl diese Kurvenschneidevorrichtung in vollautomatisches Ausbrennen der meisten Gardinen gestattet, gibt es vereinzelt Gardinentypen, die mit dieser Kurvenschneidevorrichtung noch nicht vollautomatisch bearbeitet werden können.

Ausgehend von diesem Stand der Technik liegt der vorliegenden Erfindung die Aufgabe zugrunde, ein Verfahren zum Steuern einer Kurvenschneidevorrichtung der eingangs genannten Art sowie eine Kurvenschneidevorrichtung der eingangs genannten Art so weiterzubilden, daß auch komplizierte Muster geschnitten werden können.

Diese Aufgabe wird durch ein Verfahren gemäß Patentanspruch 1 gelöst.

Die vorliegende Erfindung lehrt, daß die Mustersegmente von jeweils einem Muster, welches sich periodisch entlang der zu schneidenden Linie wiederholt, vorab in zwei verschiedene Typen unterteilt werden, nämlich in unkritische Mustersegmente, die sich für eine Ansteuerung des Schneidkopfes aufgrund der optoelektronischen Erfassung der Relativlage zwischen dem Schneidkopf und dem Lichtspalt der Textilwaren eignen, und kritische Mustersegmente, die sich für eine Ansteuerung des Schneidkopfes aufgrund dieser optoelektronischen Erfassung der Relativlage zwischen Schneidkopf und Lichtspalt der Textilbahn nicht eignen. Für diejenigen Mustersegmente, die als kritisch von der Bedienungsperson eingestuft sind, werden Relativbewegungswerte für die Ansteuerung des Schneidkopfes abgespeichert. Bei dem Kurvenschneiden, das zunächst für die unkritischen Mustersegmente aufgrund der optoelektronischen Erfassung der Relativlage durchgeführt wird, wird nach Erreichen des Endpunktes des letzten unkritischen Mustersegmentes auf eine Steuerung aufgrund der abgespeicherten Bewegungswerte umgeschaltet. Erfindungswesentlich ist, daß diese Steuerung ausgehend von dem Endpunkt des letzten unkritischen Mustersegmentes, welcher durch optoelektronische Lagesteuerung des Schneidkopfes erreicht wurde, anhand von Relativbewegungswerten für den Schneidkopf für die kritischen Mustersegmente erfolgt. Hierdurch beginnt das kritische Mustersegment an einem Ort, der aufgrund des Auslaufens der Textilbahn oder der Gardine quer zur Laufrichtung von Musterperiode zu Musterperiode variieren kann, so daß das kritische Mustersegment nötigerweise mit der passenden Lage an das letzte unkritische Mustersegment anschließt.

Die erfindungsgemäße Kurvenschneidevorrichtung kommt ohne eine auf die Textilbahn aufgebrachte oder in diese eingewebte reflektierende Markierung aus.

Die erfindungsgemäße Kurvenschneidevorrichtung ermittelt die Relativlage des Schneidkopfes gegenüber einem Lichtspalt im Webmuster der Textilbahn bzw. der Gardine mit zwei Lichtschranken, die derart angeordnet sind, daß ihre Lichtstrahlen die Ebene der Textilbahn an zwei Lichtpunkten schneiden, die einen unterschiedlichen senkrechten Abstand zu einer Achse haben, die durch die Laufrichtung der Textilbahn durch den Schneidpunkt des Schneidmittels definiert ist. Aufgrund des unterbrochenen bzw. nicht-unterbrochenen Zustandes dieser beiden Lichtschranken wird der Schneidkopf in der Weise entlang einer Kante des Gewebebereichs der Textilbahn, welche an den Lichtspalt angrenzt, geführt, daß in einem "normalen" Steuerzustand diejenige Lichtschranke, die weiter von dem Schneidmittel beabstandet ist, ständig in dem Gewebebereich liegt, während die zu dem Schneidmittel näher benachbarte Lichtschranke entlang der Gewebebereichskante der Textilbahn am Lichtspalt geführt wird. Diese Führung findet in der Weise statt, daß bei einem bevorzugten Ausführungsbeispiel bei Unterbrechung dieser letztgenannten Lichtschranke der Schneidkopf weiter von dem Gewebebereich wegbewegt wird, während in dem ununterbrochenen Zustand dieser Lichtschranke der Schneidkopf in Richtung auf den Gewebebereich hinbewegt wird. Sollte jedoch die erstgenannte Lichtschranke, die in dem "normalen" Steuerzustand ständig unterbrochen ist, aufgrund einer Ausnehmung oder Einbuchtung des Gewebebereichs in Richtung zu dem Lichtspalt hin nicht unterbrochen sein, so wird dieser "anormale" Gewebezustand durch die geschlossene, erstgenannte Lichtschranke erfaßt und bei dieser Erfassung die Bewegung des Schneidkopfes zumindest in Richtung auf den Gewebebereich hin in Abhängigkeit von dem Unterbrechungszustand der zweitgenannten Lichtschranke außer Betrieb gesetzt. Dieses Außerbetriebsetzen kann für eine vorbestimmte Zeitdauer oder Totzeit stattfinden oder, wenn dies erwünscht ist, in Abhängigkeit von der Transportgeschwindigkeit der Textilbahn für eine vorbestimmte Laufstrecke derselben erfolgen.

Bevorzugte Weiterbildungen des erfindungsgemäßen Verfahrens zum Steuern der Kurvenschneidevorrichtung sind in den Unteransprüchen definiert.

Nachfolgend werden unter Bezugnahme auf die beiliegenden Zeichnungen bevorzugte Ausführungsformen der erfindungsgemäßen Kurvenschneidevorrichtung näher erläutert. Es zeigen:
- Fig. 1: eine Draufsicht auf eine Kurvenschneidevorrichtung nach der Erfindung;
- Fig. 2: eine perspektivische Darstellung einer Ausführungsform des Schneidkopfes der in Fig. 1 gezeigten Kurvenschneidevorrichtung;
- Fig. 3: eine Draufsicht auf den Schneidkopf gemäß Fig. 2;
- Fig. 4: eine Seitenschnittdarstellung einer Ausführungsform des Schneidkopfes;
- Fig. 5: eine Schnittdarstellung des Schneidkopfes in der Ebene der Textilbahn; und
- Fig. 6: eine skizzenhafte Darstellung zur Verdeutlichung von kritischen und unkritischen Mustersegmenten.

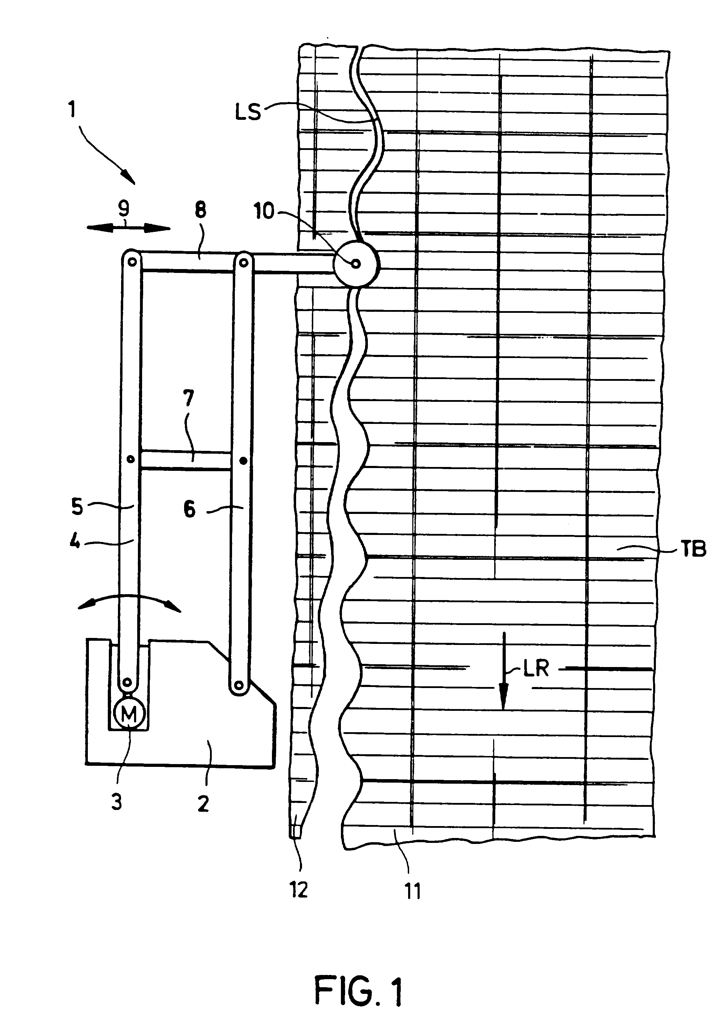

Wie in Fig. 1 gezeigt ist, umfaßt die Kurvenschneidevorrichtung, die dort in ihrer Draufsichtdarstellung gezeigt ist und in ihrer Gesamtheit mit dem Bezugszeichen 1 bezeichnet ist, eine Antriebsvorrichtung 2 mit einem elektrischen Schrittmotor 3, der zum Schwenkbewegen einer Parallelogrammführung 4 dient. Die Parallelogrammführung umfaßt zwei parallele Hebel 5, 6, wobei einer der Hebel 5 an dem Schrittmotor 3 angelenkt ist und der andere Hebel 6 an einem Gehäuse der Antriebsvorrichtung 2 schwenkbeweglich gelagert ist. Zwischen den Hebeln 5, 6 erstreckt sich ein Versteifungsarm 7, der seinerseits an seinen Enden gegenüber den Hebeln 5, 6 drehbar gelagert ist.

An dem von dem Schrittmotor 3 abgewandten Ende der Parallelogrammführung 4 ist ein Führungsarm 8 angebracht, der in Richtung des Pfeiles 9 entsprechend der Drehantriebsbewegung des Schrittmotors 3 hin- und herbewegbar ist.

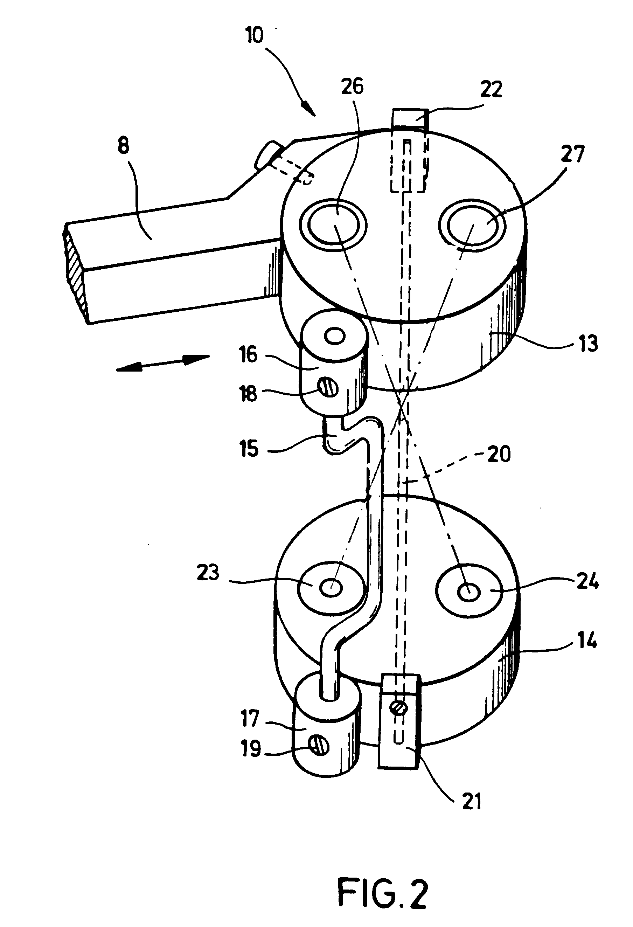

An seinem freien Ende trägt der Führungsarm 8 einen Schneidkopf 10, dessen Ausgestaltung nachfolgend unter Bezugnahme auf die Fig. 2 bis 6 näher erläutert werden wird.

Die Kurvenschneidevorrichtung 1 dient zum Schneiden einer Textilbahn TB, welche typischerweise eine Gardinenbahn ist, längs eines sogenannten Lichtspaltes, wobei die Textilbahn in das rechtsseitig in Fig. 1 gezeigte Endprodukt 11 und einen Abfallstreifen 12 zerteilt wird.

Ergänzend sei angemerkt, daß die Textilbahn TB von einer (nicht dargestellten) Transportvorrichtung automatisch in die Laufrichtung LR über einen (nicht gezeigten) Tisch gezogen wird.

Nachfolgend wird unter Bezugnahme auf Fig. 2 ein Ausführungsbeispiel des Schneidkopfes 10 näher erläutert. Der Schneidkopf 10 umfaßt einen oberen Schneidkopfblock 13 und einen unteren Schneidkopfblock 14. Die beiden Schneidkopfblöcke 13, 14 sind durch ein Befestigungselement 15 miteinander verbunden, welches doppelt gekröpft in einer noch näher zu erläuternden Weise derart verläuft, daß es sich in der Textilbahnebene nahe zu einem Schneidpunkt des Schneidmittels gegenüber der Textilbahn erstreckt und als Spaltkeil zum Abspalten des Abfallstreifens 12 der Textilbahn von dem Endprodukt 11 dient.

Das Befestigungselement 15 ist an den Schneidkopfblöcken 13, 14 in hülsenförmigen Führungsvorrichtungen 16, 17 angeordnet und gegenüber diesen mittels Madenschrauben 18, 19 in einer einstellbaren Entfernung der Schneidkopfblöcke 13, 14 zueinander festlegbar.

Bei der in Fig. 2 gezeigten Ausgestaltung des Schneidkopfes wird das Schneidmittel durch einen Glühdraht 20 gebildet, der schräg zur Vertikalen durch zwei an den Schneidkopfblöcken 13, 14 diametral gegenüber angeordnete Glühdrahthalter 21, 22 in seiner Lage gesichert und gespannt gehalten wird. Die Glühdrahthalter 21, 22 sind als Isolatoren ausgeführt. Der Glühdraht 20 ist als Widerstandsglühdraht ausgeführt, der von einem geeigneten Schneidstrom beaufschlagt wird.

Bereits an dieser Stelle sei angemerkt, daß für die Zwecke der Erfindung auch jegliches andere Schneidmittel in Betracht kommt. Beispielsweise kann der Schneidkopf 10 eine ausreichend starke Laserstrahlquelle aufweisen, mit der die Textilbahn thermisch am Ort des Lichtspaltes zerteilt wird.

Wie ferner in Fig. 2 skizzenhaft angedeutet ist, umfaßt bei der dort gezeigten Ausführungsform der untere Schneidkopfblock 14 zwei Lichtempfangselemente 23, 24, welche beispielsweise als Fototransistoren ausgebildet sein können. Der obere Schneidkopfblock 13 umfaßt bei dieser Ausgestaltung zwei Lichtsendeelemente 26, 27, welche beipielsweise durch LED's gebildet sein können.

Die Lichtempfangselemente 23, 24 in einem der beiden Schneidkopfblöcke 13, 14 bilden zusammen mit den Lichtsendeelementen 26, 27 in dem anderen der beiden Schneidkopfblöcke bei dem hier gezeigten Ausführungsbeispiel zwei Lichtschranken 24, 26; 23, 27, deren Erfassungslichtstrahlen in Fig. 2 strichpunktiert dargestellt sind.

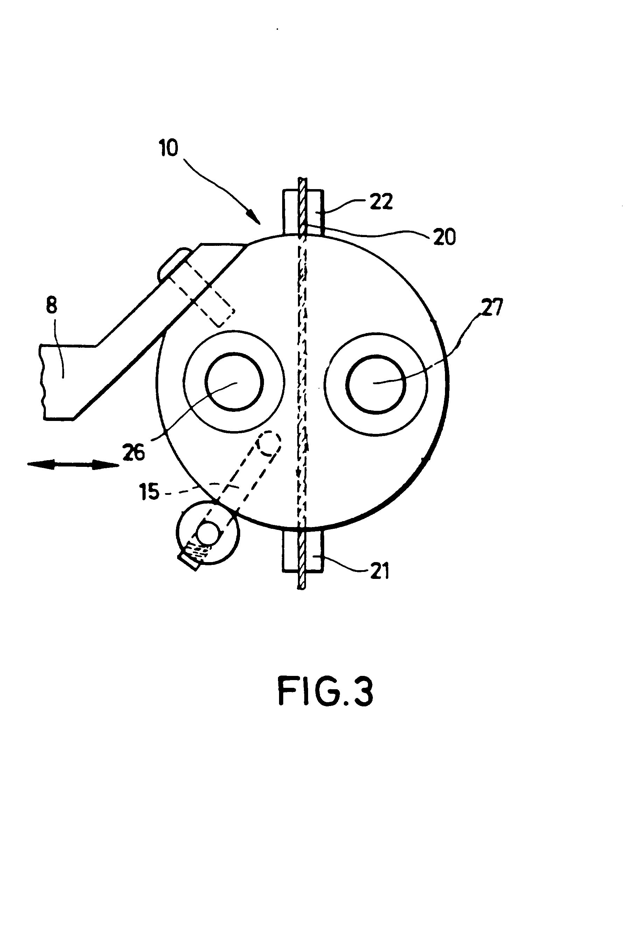

Fig. 3 zeigt eine Draufsicht auf den in Fig. 2 gezeigten Schneidkopf 10 zur Verdeutlichung der Lage des Glühdrahtes 20, der Lichtsendeelemente 26, 27 sowie des Befestigungselementes 15.

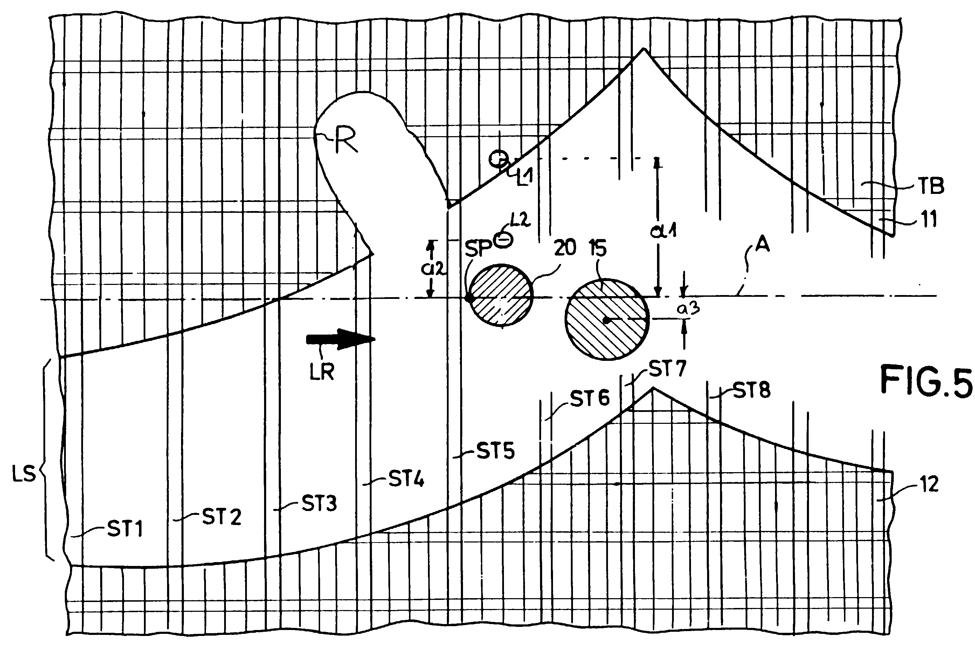

Wie aus Fig. 2 schematisch zu erkennen ist und noch genauer aus der nachfolgenden Beschreibung unter Bezugnahme auf Fig. 5 verdeutlicht werden wird, sind die Erfassungslichtstrahlen der Lichtschranken in einem Winkel zu der Vertikalen auf der Ebene der Textilbahn TB in der Weise gegenseitig geneigt angeordnet, daß der gegenseitige Abstand der Lichtpunkte, an denen die Lichtstrahlen die Ebene der Textilbahn TB schneiden, geringer ist als der gegenseitige Abstand der benachbarten Lichtsendeelemente 26, 27 bzw. der benachbarten Lichtempfangselemente 23, 24. Hierdurch ist es möglich, den gegenseitigen Abstand der Lichtpunkte, den die Lichtstrahlen der Lichtschranken in der Ebene der Textilbahn festlegen, trotz vorgegebener Geometrie der Lichtempfangselemente bzw. Lichtsendeelemente beliebig klein zu wählen.

Fig. 5 zeigt in der Ebene der zu bearbeitenden Textilbahn TB die von den beiden Lichtstrahlen im Schnitt dieser Ebene gebildeten Lichtpunkte L1 und L2. Erfindungsgemäß sind die durch die Lichtsendeelemente und Lichtempfangselemente festgelegten Lichtschranken derart angeordnet, daß im Fall von zwei Lichtpunkten L1, L2, beide Lichtpunkte L1, L2 auf einer Seite des Schneidpunktes SP des Schneidmittels 20 an der Textilbahn TB bezogen auf deren Laufrichtung LR liegen. Mit anderen Worten liegen in der zeichnerischen Darstellung gemäß Fig. 5, bei der sich eine Achse A in Laufrichtung LR durch den Schneidpunkt SP erstreckt, die beiden Lichtpunkte L1, L2 oberhalb der Achse A.

Wesentlich ist, daß der erste Lichtpunkt L1 um einen Abstand a1 oberhalb der Achse A liegt, welcher größer ist als derjenige Abstand a2, um den der andere Lichtpunkt L2 von der Achse A entfernt ist. Bei dieser Anordnung liegt, wie sich dies aufgrund der nachfolgend beschriebenen Steuerung ergibt, der erste Lichtpunkt L1 normalerweise in dem Gewebebereich 11 der Textilbahn TB, während der zweite Lichtpunkt L2 an der Kante des Gewebebereichs 11 der Textilbahn TB entlang geführt wird. Genauer gesagt wird eine derartige Steuerung der Antriebsvorrichtung 2 vorgenommen, daß der Schneidkopf 10 bei Nicht-Unterbrechung der zweiten Lichtschranke 23, 27, die den zweiten Lichtpunkt L2 bildet, in eine erste Richtung (in Fig. 5 nach oben) auf den Gewebebereich 11 der Textilbahn TB hinbewegt wird, bis diese zweite Lichtschranke 23, 27 unterbrochen wird. In diesem Zustand wird die Bewegungsrichtung des Schneidkopfes 10 umgekehrt, wobei diese umgekehrte Bewegungsrichtung (in Fig. 5 nach unten gerichtet) so lange beibehalten wird, bis die zweite Lichtschranke 23, 27, die den zweiten Lichtpunkt L2 bildet, erneut den Nicht-Unterbrechungs-Zustand einnimmt.

Textilbahnen haben insbesondere im Falle von Gardinen die Eigenschaft, daß der Lichtspalt LS nicht in idealer Weise die zu schneidende Kante des Gewebebereichs 11 definiert. Es kommt immer wieder zu Gewebeunregelmäßigkeiten, die typischerweise die Gestalt einer Ausnehmung R innerhalb des Gewebebereiches 11 haben können, die sich typischerweise in einem Winkel von etwa 45° vom Lichtspalt LS ausgehend an diesen anschließt und sich in den Gewebebereich hinein erstreckt. In diesem Fall würde eine Steuerung alleine aufgrund der zweiten Lichtschranke L2 dazu führen, daß der Schneidkopf in unerwünschter Weise in Richtung der Ausnehmung R (in Fig. 5 nach oben) auswandert. Dies würde zur Zerstörung der zu schneidenden Textilbahn führen. Die Erfindung sieht daher vor, mittels der ersten Lichtschranke die Steuerung der Antriebsvorrichtung zumindest in die erste Richtung (in Richtung zum Gewebebereich hin) außer Betrieb zu setzen, sobald die erste Lichtschranke nicht unterbrochen ist. Dieses Außerbetriebsetzen kann im einfachsten Ausführungsfall über eine vorbestimmte Totzeit erfolgen, die beispielsweise mittels eines sogenannten RC-Gliedes definiert sein kann. Auch ist es möglich, die Dauer des Außerbetriebsetzens der Steuerung der Antriebsvorrichtung zur Bewegung des Schneidkopfes in die erste Richtung aufgrund der zurückgelegten Laufstrecke der Textilbahn, also in Abhängigkeit von deren Bewegungsgeschwindigkeit zu wählen.

In Abweichung von der gezeigten Ausführungsform kann anstelle der ersten Lichtschranke eine Mehrzahl von ersten Lichtschranken vorgesehen sein, die dann vorzugsweise in Laufrichtung LR gestaffelt angeordnet sind, um beispielsweise die Steuerung der Antriebsvorrichtung für den Schneidkopf 10 schon dann außer Betrieb zu setzen, wenn dieser noch nicht ganz den Ort der Ausnehmung R erreicht hat. Ferner ist es nicht zwingend erforderlich, nur eine einzige zweite Lichtschranke L2 vorzusehen, die die Steuerung des Schneidkopfes in Abhängigkeit von ihrem Unterbrechungszustand entlang der Kante des Gewebebereiches 11 vornimmt. Verwendet man anstelle der einen, gezeigten Lichtschranke L2 zwei geringfügig (in Fig. 5) übereinander angeordnete zweite Lichtschranken, die jedoch beide einen geringeren Abstand zu der Achse A haben als der erste Lichtpunkt L1, der durch die erste Lichtschranke 24, 26 gebildet wird, so läßt sich eine Hysterese-Steuerung realisieren. Dies kann beispielsweise dadurch geschehen, daß bei zwei derartigen zweiten Lichtschranken nur dann eine Steuerung in die erste Richtung (auf den Gewebebereich 11 hin) vorgenommen wird, wenn beide Lichtschranken L2 nicht unterbrochen sind, während nur dann eine entgegengesetzt gerichtete Antriebssteuerung durchgeführt wird, wenn beide Lichtschranken L2 gleichzeitig von dem Gewebebereich 11 unterbrochen sind.

Das Befestigungselement 15 durchläuft in der Weise die Ebene der Textilbahn TB, daß dieses in Laufrichtung der Textilbahn TB hinter dem Schneidpunkt SP liegt und bezogen auf die Achse A in Richtung auf den Abfallstreifen 12 hin um einen dritten Abstand a3 versetzt ist.

Wie in Fig. 5 gezeigt ist, wird der Glühdraht 20 innerhalb des Lichtspaltes LS geführt, wodurch die sich durch den Spalt erstreckenden Stege ST1, ST2, ST3, ST4, ST5, ST6, ST7, ST8, ... entsprechend des Vorschubes der Textilbahn TB durchschnitten werden.

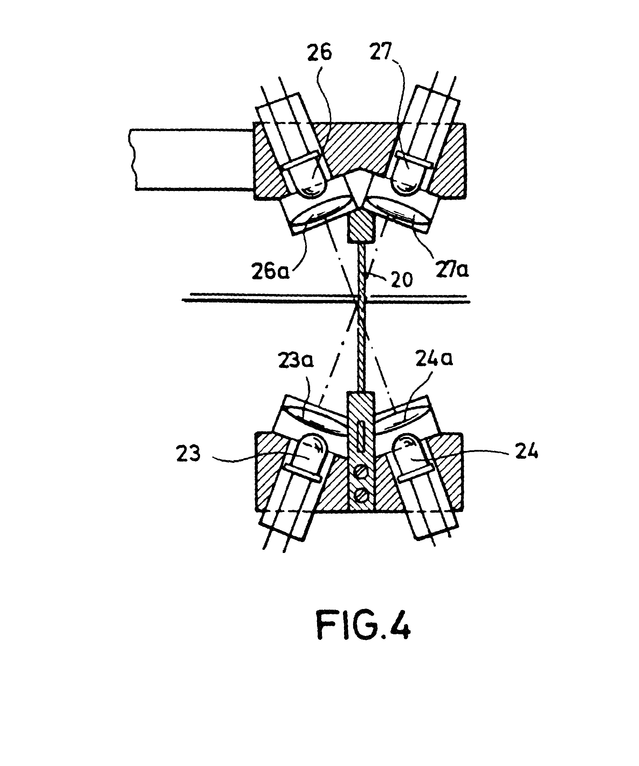

Die Fig. 4 zeigt eine senkrechte Schnittdarstellung der Ausführungsform des Schneidkopfes in Querrichtung desselben. Mit Fig. 2 übereinstimmende Bezugszeichen bezeichnen gleiche oder ähnliche Teile, so daß auf deren erneute Erläuterung verzichtet werden kann.

Wie in Fig. 5 zu sehen ist, sind den Sende- bzw. Empfangselementen 23, 24; 26, 27 geeignete Optiken 23a, 24a; 26a, 27a zugeordnet, die einer verbesserten Fokussierung dienen, so daß bei gegebener Ausgangsleistung der Lichtsendeelemente 26, 27 sowie gegebener Empfindlichkeit der Lichtempfangselemente 23, 24 der vertikale Abstand und damit die Länge der Lichtschranken in vertikaler Richtung erhöht werden kann. Hierdurch werden die an sich empfindlichen optoelektronischen Elemente auf eine ausreichend große Entfernung zu dem Schneidmittel, das beispielsweise ein Glühdraht 20 oder ein Laserstrahl sein kann, gebracht, um deren Erwärmung oder Verschmutzung zu verhindern.

Vorzugsweise sind sowohl die Lichtsendeelemente 26, 27 wie auch die Lichtempfangselemente 23, 24 getaktet, wodurch der Fremdlichteinfluß, der insbesondere von dem Glühdraht 20 bewirkt wird, minimiert werden kann.

Bei dem Ausführungsbeispiel sind das Lichtsendeelement und das Lichtempfangselement einer jeden Lichtschranke während des Betriebes auf unterschiedlichen Seiten der durch die Textilbahn festgelegten Ebene angeordnet. Bei Verwendung einer reflektierenden oder spiegelnden Fläche direkt unterhalb der Textilbahn können sowohl Sende- wie auch Empfangselement einer jeden Lichtschranke oberhalb der Textilbahnebene liegen.

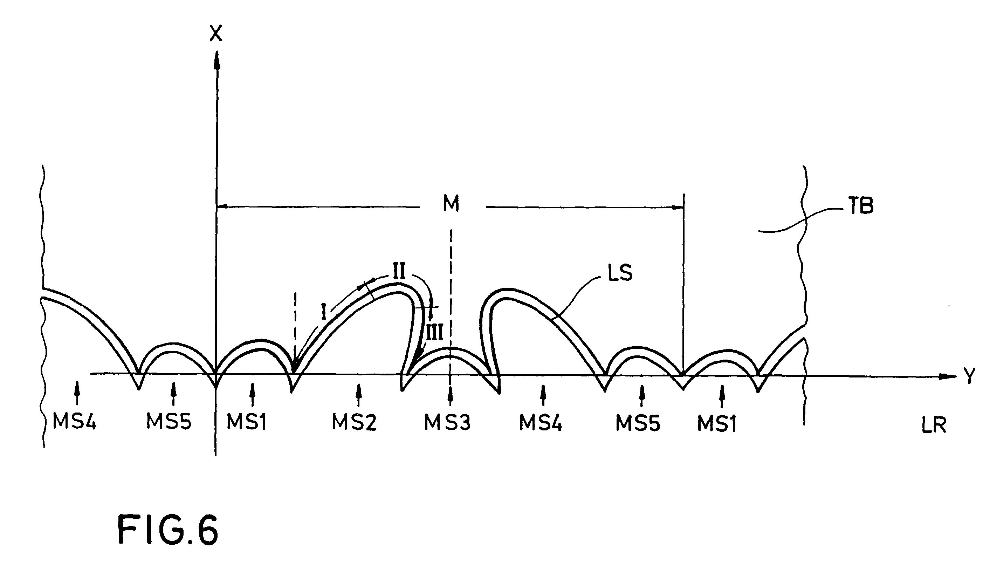

Das erfindungsgemäße Verfahren zum Steuern der Kurvenschneidevorrichtung, die beispielsweise die in den Fig. 1 bis 5 beschriebene Struktur haben kann, wird nachfolgend unter Bezugnahme auf Fig. 6 näher erläutert. Die Erfindung geht von der Erkenntnis aus, daß die mit einer Kurvenschneidevorrichtung beim Schneiden einer Textilbahn zu erzeugende Schnittlinie sich periodisch wiederholenden Mustern mit jeweils wenigstens zwei Mustersegmenten entspricht. Die Erfindung sieht vor, daß zunächst eines der Muster von der Bedienungsperson analysiert wird, um kritische und unkritische Mustersegmente zu unterscheiden. Wie in Fig. 6 verdeutlicht ist, definiert die zu erzeugende Schnittlinie innerhalb des Lichtspaltes LS also jeweils sich periodisch wiederholende Muster, die hier mit dem Bezugszeichen M bezeichnet sind. Ein derartiges Muster umfaßt eine Vielzahl von Mustersegmenten MS1, ..., MS5. Diejenigen Mustersegmente MS1, MS3, MS5, die sich für ein Ansteuern des Schneidkopfes aufgrund der optoelektronisch erfaßten Relativlage zwischen dem Schneidkopf und dem Lichtspalt LS der Textilbahn TB eignen, seien nachfolgend als unkritische Mustersegmente bezeichnet. Als kritische Mustersegmente seien im Gegensatz hierzu die Mustersegmente MS2, MS4 bezeichnet, die durch optoelektronische Erfassung der Relativlage zwischen dem Schneidkopf und dem Lichtspalt bei unveränderter Vorwärtsbewegung der Textilbahn in Laufrichtung LR nicht geschnitten werden können. Bei den hier gezeigten Mustersegmenten MS2, MS4 ist dies der Fall, weil diese Mustersegmente teilweise negative Steigungen aufweisen, und daher nur geschnitten werden können, wenn im Bereich der negativ angestellten Flanken der Lauf der Textilbahn TB angehalten und richtungsmäßig umgekehrt wird.

Erfindungsgemäß sind für diese kritischen Mustersegmente jeweils Relativbewegungswerte für die Ansteuerung des Schneidkopfes 10 ausgehend von dem Endpunkt des vorhergehenden unkritischen Mustersegmentes MS1, MS3 abgespeichert. Bei dem bevorzugten Ausführungsbeispiel sind diese Relativbewegungswerte in Form von Impulszahlen für die Impulse zur Ansteuerung des Schrittmotors der Antriebsvorrichtung 2 für jeweils eine Mehrzahl von Punkten für jedes Mustersegment gespeichert. Diesen gespeicherten Werten sind bei dem bevorzugten Ausführungsbeispiel Steuersignale für die Antriebsgeschwindigkeit des Antriebes der Textilbahn in Laufrichtung LR zugeordnet. So ist beispielsweise das zweite Mustersegment MS2 im Bereich I jeweils in Form von mehreren Impulswerten oder Impulszahlen für den Schrittmotor der Schneidkopfsteuerung in x-Richtung abgespeichert, wobei diesen Werten ein Steuersignal für den Antriebsmotor für die Textilbahn in y-Richtung zugeordnet ist, welches einer Vorwärtsförderung mit hoher Geschwindigkeit entspricht. In dem folgenden Bereich II wird die Vorwärtsgeschwindigkeit in y-Richtung durch ein geeignetes Steuersignal auf einen kleinen Wert eingestellt. Im Bereich III findet eine Rückwärts-Bewegung der Textilbahn in deren Laufrichtung (y-Richtung) mit niedriger Geschwindigkeit statt, bis das Ende des abgespeicherten Musters MS2 erreicht ist. An diesem Punkt schaltet das System auf eine Steuerung durch das optoelektronische Erfassungssystem zum Erfassen der Relativlage des Schneidkopfes 10 gegenüber dem Lichtspalt LS in der Textilbahn TB um, so daß mit voller Vorwärtgeschwindigkeit in y-Richtung weitergefahren werden kann.

Vorzugsweise wird eine Orientierung des Systems innerhalb des Musters M dadurch erreicht, daß das System einen Mustersegmentzähler aufweist, der jeweils die (in Fig. 6 spitz nach unten gerichteten) Umkehrstellen der Bewegungsrichtung erfaßt. Diese Umkehrpunkterfassung kann ohne weiteres durch Auswertung des Ansteuersignales der Antriebsvorrichtung 2 erfolgen. Der Umkehrpunktzähler (nicht dargestellt) wird also bei jedem Umkehrpunkt heraufgezählt, so daß diese Umkehrpunkte sich besonders zur Umschaltung zwischen kritischen Mustersegmenten und unkritischen Mustersegmenten, also zur Umschaltung zwischen der optoelektronisch geführten Ansteuerung des Schneidkopfes und der durch die Speicherung geführten Ansteuerung des Schneidkopfes eignen.

Es sei hervorgehoben, daß das erfindungsgemäße Verfahren nicht durch ein seitliches Auslaufen bzw. einen seitlichen Versatz der Textilbahn TB (in x-Richtung) beeinträchtigt wird. In der Praxis findet beim Transport der Textilbahn in y-Richtung innerhalb gewisser Grenzen ein Schwanken der Lage der gesamten Textilbahn TB in x-Richtung statt. Aufgrund dieser Tatsache wäre es unmöglich, die Textilbahn allein aufgrund abgespeicherter Daten für das gesamte Muster M zu schneiden. Die Erfindung sieht daher vor, daß der Schneidkopf durch die optoelektronische Steuerung, die beispielsweise mittels der eingangs beschriebenen Lichtschrankentechnik erfolgen kann, bei unkritischen Mustersegmenten dem Verlauf des Lichtspaltes LS folgt, und daß nur solche Segmente aufgrund abgespeicherter Relativwerte für die Schneidkopfbewegung geschnitten werden, die nicht durch optoelektronische Lagesteuerung geführt werden können. Da also die abgespeicherten Mustersegmente zwangsläufig vom Endpunkt der optoelektronisch abgetasteten unkritischen Muster starten, folgt das System automatisch einem sich im Laufe vieler Musterperioden M einstellenden geringfügigen Versatz der Lage der Textilbahn TB in x-Richtung. Daher ermöglicht das erfindungsgemäße System ein automatisches Schneiden auch von komplizierten Musterstrukturen mit einer einfachen Steuervorrichtung, für deren Realisierung noch nicht einmal ein Mikrocomputer erforderlich ist.

Es sei hervorgehoben, daß für die Speicherung und Steuerung der Relativwerte für die Impulszahlen der kritischen Mustersegmente einfache Speicherschaltungen, deren gespeicherte Werte in Abhängigkeit von einem Taktsignal der Reihe nach ausgelesen werden können, genügen. Dieses Taktsignal kann, wie für den Fachmann selbstverständlich ist, mit dem Lauf der Textilbahn in Laufrichtung LR synchronisiert sein, obwohl dies nicht zwingend erforderlich ist.

Bei dem oben beschriebenen Ausführungsbeispiel wurde als optoelektronische Erfassungsvorrichtung eine Anordnung von zwei Lichtschranken verwendet. Selbstverständlich kommt auch eine andere Anzahl von Lichtschranken in Betracht. Gleichfalls sind andere optoelektronische Erfassungsmittel zur Erfassung der Lage des Lichtspaltes verwendbar, zu denen unter anderem ein Scanner zählt. Auch mit einem Scanner mit einer nachgeschalteten Bildverarbeitungsvorrichtung kann ohne weiteres die Lage eines Lichtspaltes erfaßt und damit für Zwecke der Erfindung eingesetzt werden.

Bei dem Ausführungsbeispiel sind das Lichtsendeelement und das Lichtempfangselement einer jeden Lichtschranke während des Betriebes auf unterschiedlichen Seiten der durch die Textilbahn festgelegten Ebene angeordnet. Bei Verwendung einer reflektierenden oder spiegelnden Fläche direkt unterhalb der Textilbahn können sowohl Sende- wie auch Empfangselement einer jeden Lichtschranke oberhalb der Textilbahnebene liegen.

## Patentansprüche

1. Verfahren zum Steuern einer Kurvenschneidevorrichtung zum Schneiden einer Textilbahn entlang einer Schnittlinie, die ein sich wiederholendes Muster mit jeweils wenigstens zwei Mustersegmenten festlegt, wobei die Kurvenschneidevorrichtung einen ein Schneidmittel (20) tragenden Schneidkopf (10), eine Antriebsvorrichtung (2) zum Bewegen des Schneidkopfes (10) im wesentlichen senkrecht zu einer Laufrichtung (LR) der Textilbahn (TB) und eine optoelektronische Erfassungsvorrichtung (23 bis 27) zum Erfassen der relativen Lage des Schneidkopfes (10) gegenüber der Textilbahn (TB) und zum Ansteuern der Antriebsvorrichtung (2) aufgrund der erfaßten Relativlage aufweist,
gekennzeichnet durch
- folgende Verfahrensschritte vor dem Kurvenschneiden:
-- Festlegen derjenigen unkritischen Mustersegmente (MS1, MS3, MS5) des Musters (M), die sich für eine Ansteuerung des Schneidkopfes (10) aufgrund der optoelektronisch erfaßten Relativlage zwischen dem Schneidkopf (10) und dem Lichtspalt (LS) der Textilbahn (TB) eignen;
-- Festlegung derjenigen kritischen Mustersegmente (MS2, MS4) des Musters (M), die sich für eine Ansteuerung des Schneidkopfes (10) aufgrund der optoelektronisch erfaßten Relativlage zwischen dem Schneidkopf (10) und dem Lichtspalt (LS) der Textilbahn (TB) nicht eignen;
-- Abspeichern von Relativbewegungswerten für die Ansteuerung des Schneidkopfes (10), welche die Relativbewegung des Schneidkopfes (10) ausgehend von dessen Lage am Endpunkt des vorhergehenden unkritischen Mustersegmentes (MS1, MS3) zur Festlegung des Verlaufes des jeweiligen kritischen Mustersegmentes (MS2, MS4) angeben; und
- folgende Verfahrensschritte bei dem Kurvenschneiden:
-- Steuern der Antriebsvorrichtung (2) für die unkritischen Mustersegmente (MS1, MS3, MS5) aufgrund der Relativlageerfassung durch die optoelektronische Erfassungsvorrichtung (23 bis 27); und
-- Steuern der Antriebsvorrichtung (2) für die kritischen Mustersegmente (MS2, MS4) aufgrund der abgespeicherten Relativbewegungswerte zur Relativverstellung des Schneidkopfes (10) ausgehend von der Lage des Schneidkopfes (10) nach Erreichen des Endpunktes des vorhergehenden, unkritischen Mustersegmentes (MS1, MS3).

2. Verfahren nach Anspruch 1, dadurch gekennzeichnet,
- daß die Relativwerte jeweils Impulszahlen für die Impulse zur Ansteuerung eines Schrittmotors der Antriebsvorrichtung (2) für den Schneidkopf (10) sind.

3. Verfahren nach Anspruch 1 oder 2, gekennzeichnet durch folgende Verfahrensschritte:
- Erfassen vorbestimmter Bewegungsumkehrvorgänge des Schneidkopfes (10) nach jedem Mustersegment (MS1, ..., MS5),
- Zählen der Anzahl von Mustersegmenten aufgrund der Anzahl der erfaßten Bewegungsumkehrvorgänge; und
- Umschalten von der Steuerung der Antriebsvorrichtung (2) für die unkritischen Mustersegmente auf die Steuerung der Antriebsvorrichtung (2) für die kritischen Mustersegmente in Abhängigkeit von dem Zählerstand.

4. Verfahren nach einem der Ansprüche 1 bis 3, dadurch gekennzeichnet,
daß die Steuerung der Antriebsvorrichtung (2) für die kritischen Mustersegmente die Reduktion der Antriebsgeschwindigkeit der Textilbahn (TB) in Laufrichtung (LR) ab einem bestimmten Punkt innerhalb des kritischen Musters umfaßt.

5. Verfahren nach einem der Ansprüche 1 bis 4, dadurch gekennzeichnet,
daß die Steuerung der Antriebsvorrichtung (2) für die kritischen Mustersegemente die Umkehr der Antriebsrichtung der Textilbahn (TB) in Laufrichtung (LR) ab einem bestimmten Punkt innerhalb des kritischen Musters umfaßt.

6. Verfahren nach einem der Ansprüche 1 bis 5, dadurch gekennzeichnet,
daß die Steuerung der Antriebsvorrichtung (2) für die kritischen Mustersegmente das Anhalten der Textilbahn (TB) bei einem bestimmten Punkt innerhalb des kritischen Musters umfaßt.

7. Verfahren nach einem der Ansprüche 1 bis 6, dadurch gekennzeichnet,
daß eine Vielzahl von Relativbewegungswerten für die kritischen Mustersegmente abgespeichert wird.

8. Kurvenschneidevorrichtung zum Schneiden einer Textilbahn, mit
- einem ein Schneidmittel (20) tragenden Schneidkopf (10),
- einer Antriebsvorrichtung (2) zum Bewegen des Schneidkopfes (10) im wesentlichen senkrecht zu einer Laufrichtung (LR) der Textilbahn (TB), und
- einer optoelektronischen Erfassungsvorrichtung (23 bis 27) zum Erfassen der relativen Lage des Schneidkopfes (10) gegenüber der Textilbahn (TB) und zum Ansteuern der Antriebsvorrichtung (2) derart, daß die gewünschte Kurve geschnitten wird,
dadurch gekennzeichnet,
- daß die optoelektronische Erfassungsvorrichtung zur Erfassung der relativen Lage des Schneidkopfes (10) gegenüber einem Lichtspalt (LS) der Textilbahn (TB) wenigstens zwei Lichtschranken (24, 26; 23, 27) umfaßt, die derart angeordnet sind, daß die von ihnen festgelegten Lichtstrahlen die Ebene der Textilbahn (TB) an wenigstens zwei Lichtpunkten (L1, L2) schneiden,
- daß eine (24, 26) der Lichtschranken (24, 26; 23, 27) derart angeordnet ist, daß der durch sie festgelegte erste Lichtpunkt (L1) gegenüber einer in Laufrichtung der Textilbahn (TB) durch den Schneidpunkt (SP) des Schneidmittels (20) verlaufenden Achse (A) einen größeren senkrechten ersten Abstand (a1) aufweist als der senkrechte zweite Abstand (a2), den der durch die andere Lichtschranke (23, 27) festgelegte zweite Lichtpunkt (L2) gegenüber dieser Achse (A) hat,
- daß die Erfassungsvorrichtung (23, 27) die Antriebsvorrichtung in Abhängigkeit von dem Unterbrechungszustand der anderen Lichtschranke (23, 27) in eine erste Richtung auf einen Gewebebereich (11) der Textilbahn (TB) hin oder in eine zu der ersten Richtung entgegengesetzte zweite Richtung bewegt, und
- daß die Erfassungsvorrichtung (23 bis 27) die Steuerung der Antriebsvorrichtung (2) zumindest in der ersten Richtung zu dem Gewebebereich (11) hin in Abhängigkeit von dem Unterbrechungszustand der anderen Lichtschranke (23, 27) für eine vorbestimmte Zeitdauer und/oder für eine vorbestimmt Laufstrecke der Textilbahn (TB) in deren Laufrichtung (LR) außer Betrieb setzt, wenn die erste Lichtschranke (24, 26) nicht unterbrochen wird.

9. Kurvenschneidevorrichtung nach Anspruch 8, dadurch gekennzeichnet,
- daß die Erfassungsvorrichtung (23 bis 27) die Antriebsvorrichtung (2) derart ansteuert, daß der Schneidkopf (10) bei Nicht-Unterbrechung der anderen Lichtschranke (23, 27) in die erste Richtung auf den Gewebebereich (11) der Textilbahn (TB) hin bewegt wird, bis der durch die andere Lichtschranke (23, 27) festgelegte zweite Lichtpunkt (L2) den Lichtspalt (LS) verläßt und die andere Lichtschranke (23, 27) unterbrochen wird, und daß der Schneidkopf (10) bei Unterbrechung der anderen Lichtschranke (23, 27) in eine zu der ersten Richtung entgegengesetzte zweite Richtung von dem Gewebebereich (11) der Textilbahn (TB) wegbewegt wird, bis die andere Lichtschranke (23, 27) nicht mehr unterbrochen ist.

10. Kurvenschneidevorrichtung nach Anspruch 8 oder 9, dadurch gekennzeichnet,
- daß der Schneidkopf (10) einen oberen Schneidkopfblock (13) und einen unteren Schneidkopfblock (14) umfaßt,
- daß der obere Schneidkopfblock (13) mittels eines Führungsarmes (18) mit der Antriebsvorrichtung (2) verbunden ist, und
- daß der untere Schneidkopfblock (14) an dem oberen Schneidkopfblock (13) mittels eines als Spaltkeil für die geschnittene Textilbahn (TB) wirkenden Befestigungselementes (15) festgelegt ist.

11. Kurvenschneidevorrichtung nach einem der Ansprüche 8 bis 10, dadurch gekennzeichnet,
daß der Spaltkeil, den das Befestigungselement (15) gegenüber der Textilbahn (TB) bildet, in Laufrichtung (LR) der Textilbahn (TB) hinter dem Schneidpunkt (SP) und bezogen auf die in Laufrichtung (LR) durch den Schneidpunkt (SP) gehende Achse (A) um einen dritten Abstand (a3) in Richtung auf den von der Textilbahn (TB) abgeschnittenen Abfalltextilstreifen (12) versetzt angeordnet ist.

12. Kurvenschneidevorrichtung nach einem der Ansprüche 8 bis 11, dadurch gekennzeichnet,
daß das Schneidmittel ein zwischen den Schneidkopfblöcken (13, 14) gespannter Glühdraht (20) ist.

13. Kurvenschneidevorrichtung nach einem der Ansprüche 8 bis 12, dadurch gekennzeichnet,
daß das Schneidmittel ein Laserstrahl oder eine Laserlichtquelle ist.

14. Kurvenschneidevorrichtung nach einem der Ansprüche 8 bis 13, dadurch gekennzeichnet,
daß jede Lichtschranke (24, 26; 23, 27) durch ein Sendeelement (26, 27) in einem Schneidkopfblock (13) und ein Empfangselement (23, 24) in dem anderen Schneidkopfblock (14) gebildet ist.

15. Kurvenschneidevorrichtung nach einem der Ansprüche 8 bis 14, dadurch gekennzeichnet,
daß die Lichtschranken (24, 26; 23, 27) derart angeordnet sind, daß die von ihr erzeugten Lichtstrahlen in einem Winkel zu der Vertikalen auf der Ebene der Textilbahn (TB) in der Weise gegenseitig geneigt angeordnet sind, daß der gegenseitige Abstand der Lichtpunkte (L1, L2) geringer als der gegenseitige Abstand benachbarter Sende- oder Empfangselemente (23 bis 27) der Lichtschranken ist.

## Claims

1. A method of controlling a curve cutting device for cutting a textile web along a cutting line which determines a recurring pattern comprising at least two pattern segments each time, said curve cutting device comprising a cutting head (10) carrying a cutting means (20), a driving device (2) for moving said cutting head (10) essentially at right angles to a direction of movement (LR) of the textile web (TB), and an optoelectronic detection device (23 to 27) for detecting the position of the cutting head (10) relative to the textile web (TB) and for controlling the driving device (2) on the basis of the relative position detected,
characterized by
- the following method steps carried out prior to curve cutting:
-- determining the non-critical pattern segments (MS1, MS3, MS5) of the said pattern (M) which are suitable for a control of the cutting head (10) on the basis of the optoelectronically detected position of the cutting head (10) relative to the light gap (LS) of the textile web (TB);
-- determining the critical pattern segments (MS2, MS4) of the said pattern (M) which are not suitable for a control of the cutting head (10) on the basis of the optoelectronically detected position of the cutting head (10) relative to the light gap (LS) of the textile web (TB);
-- storing relative movement values for the control of the cutting head (10) for the critical pattern segments (MS2, MS4) which start from the end of the preceding, non-critical pattern segment (MS1, MS3); and by
- the following method steps during curve cutting:
-- controlling the driving device (2) for the non-critical pattern segments (MS1, MS3, MS5) on the basis of the detection of the relative position by the optoelectronic detection device (23 to 27); and
-- controlling the driving device (2) for the critical pattern segments (MS2, MS4) on the basis of the stored relative movement values for a relative displacement of the cutting head (10) starting from the position of the cutting head (10) when the end of the preceding, non-critical pattern segment (MS1, MS3) has been reached.

2. A method according to claim 1, characterized in
- that the respective relative values are numbers of pulses for the pulses used for controlling a stepping motor of the driving device (2) for the cutting head (10).

3. A method according to claim 1 or 2, characterized by the following method steps:
- detecting predetermined movement reversal processes of the cutting head (10) after each pattern segment (MS1, ..., MS5),
- counting the number of pattern segments on the basis of the number of detected movement reversal processes; and
- changing over from the control of the driving device (2) for the non-critical pattern segments to the control of the driving device (2) for the critical pattern segments in response to the count.

4. A method according to one of the claims 1 to 3, characterized in
that the control of the driving device (2) for the critical pattern segments includes a reduction of the driving speed of the textile web (TB) in the direction of movement (LR) from a specific point within the critical pattern.

5. A method according to one of the claims 1 to 4, characterized in
that the control of the driving device (2) for the critical pattern segments includes a reversal of the driving direction of the textile web (TB) in the direction of movement (LR) from a specific point within the critical pattern.

6. A method according to one of the claims 1 to 5, characterized in
that the control of the driving device (2) for the critical pattern segments includes the step of bringing the textile web (TB) to a standstill at a specific point within the critical pattern.

7. A method according to one of the claims 1 to 6, characterized in
that a plurality of relative movement values is stored for the critical pattern segments.

8. A curve cutting device for cutting a textile web, comprising
- a cutting head (10) carrying a cutting means (20),
- a driving device (2) for moving said cutting head (10) essentially at right angles to a direction of movement (LR) of the textile web (TB), and
- an optoelectronic detection device (23 to 27) for detecting the position of the cutting head (10) relative to the textile web (TB) and for controlling the driving device (2) in such a way that the desired curve will be cut,
characterized in
- that, for detecting the position of the cutting head (10) relative to a light gap (LS) of the textile web (TB), the optoelectronic detection device comprises at least two light barriers (24, 26; 23, 27) which are arranged in such a way that the light rays defined thereby will intersect the plane of the textile web (TB) at at least two light spots (L1, L2),
- that one (24, 26) of said light barriers (24, 26; 23, 27) is arranged in such a way that the first light spot (L1) determined thereby is located at a perpendicular first distance (a1) from an axis (A) extending in the direction of movement of the textile web (TB) through the cutting spot (SP) of the cutting means (20), said first perpendicular distance (a1) being larger than the second perpendicular distance (a2) between the second light spot (L2), which is determined by the other light barrier (23, 27), and said axis (A),
- that, depedending on the interruption condition of the other light barrier (23, 27), the detection device (23, 27) moves the driving device in a first direction towards an area of woven fabric (11) of the textile web (TB) or in a second direction opposite to said first direction, and
- that, if the first light barrier (24, 26) is not interrupted, the detection device (23 to 27) will deactivate the control of the driving device (2) at least in the first direction towards said area of woven fabric (11), depending on the interruption condition of the other light barrier (23, 27), for a predetermined period and/or for a predetermined path of movement of the textile web (TB) in the direction of movement (LR) thereof.

9. A curve cutting device according to claim 8, characterized in that
- that the detection device (23 to 27) controls the driving device (2) in such a way that, when the other light barrier (23, 27) is uninterrupted, the cutting head (10) is moved in the first direction towards the area of woven fabric (11) of the textile web (TB) until the second light spot (L2) determined by the other light barrier (23, 27) leaves the light gap (LS) and the other light barrier (23, 27) is interrupted, and that, when said other light barrier (23, 27) is interrupted, the cutting head (10) is moved in a second direction opposite to said first direction away from the area of woven fabric (11) of the textile web (TB) until said other light barrier (23, 27) is no longer interrupted.

10. A curve cutting device according to one of the claims 8 or 9, characterized in
- that the cutting head (10) comprises an upper cutting head block (13) and a lower cutting head block (14),
- that the upper cutting head block (13) is connected to the driving device (2) by means of a guide arm (18), and
- that the lower cutting head block (14) is fastened to the upper cutting head block (13) by means of a fastening element (15) acting as a splitting wedge for the cut textile web (TB).

11. A curve cutting device according to one of the claims 8 to 10, characterized in
that, when seen in the direction of movement (LR) of the textile web (TB), the splitting wedge, which the fastening element (15) defines with respect to the textile web (TB), is arranged behind the cutting spot (SP) and that, in relation to the axis (A) extending through the cutting spot (SP) in the direction of movement (LR), said splitting wedge is displaced by a third distance (a3) towards the strip of textile waste (12) cut off the textile web (TB).

12. A curve cutting device according to one of the claims 8 to 11, characterized in
that the cutting means is a glow wire (20) stretched between the cutting head blocks (13, 14).

13. A curve cutting device according to one of the claims 8 to 12, characterized in
that the cutting means is a laser beam or a laser light source.

14. A curve cutting device according to one of the claims 8 to 13, characterized in
that each light barrier (24, 26; 23, 27) is defined by a light-emitting element (26, 27) in one cutting head block (13) and a light-receiving element (23, 24) in the other cutting head block (14).

15. A curve cutting device according to one of the claims 8 to 14, characterized in
that the light barriers (24, 26; 23, 27) are arranged in such a way that the light rays produced by them are arranged at an angle relative to the vertical on the plane of the textile web (TB) in a mutually inclined manner in such a way that the mutual distance between the light spots (L1, L2) is smaller than the mutual distance between neighbouring light-emitting elements or light-receiving elements (23 to 27) of said light barriers.

## Revendications

1. Procédé de commande d'un dispositif à découper en courbe une bande textile le long d'une ligne de découpe qui détermine un dessin se répétant, avec chaque fois au moins deux segments de dessin, le dispositif à découper en courbe présentant une tête de coupe (10) portant un moyen de coupe (20), un dispositif d'entraînement (2) destiné à déplacer la tête de coupe (10) sensiblement perpendiculairement à une direction de déroulement (LR) de la bande textile (TB) et un dispositif de saisie optoélectronique (23 à 27) destiné à capter la position de la tête de coupe (10) par rapport à la bande textile (TB) et à commander le dispositif d'entraînement (2) sur base de la position relative détectée, caractérisé par
- les étapes de procédé suivantes, avant la découpe en courbe, consistant à:
-- déterminer les segments de dessin non-critiques (MS1, MS3, MS5) du dessin (M) qui conviennent pour une commande de la tête de coupe (10) sur base de la position, captée optoélectroniquement, de la tête de coupe (10) par rapport à la clairière (LS) de la bande textile (TB),
-- déterminer les segments de dessin critiques (MS2, MS4) du dessin (M) qui ne conviennent pas pour une commande de la tête de coupe (10) sur base de la position, captée optoélectroniquement, de la tête de coupe (10) par rapport à la clairière (LS) de la bande textile (TB),
-- mémorisation de valeurs de déplacement relatif pour la commande de la tête de coupe (10), qui indiquent le déplacement relatif de la tête de coupe (10) en partant de sa position au point final du segment de dessin non-critique (MS1, MS3) précédent, pour déterminer l'évolution du segment de dessin critique (MS2, MS4) concerné, et
- les étapes de procédé suivantes, lors de la découpe en courbe, consistant à:
-- commander le dispositif d'entraînement (2) pour les segments de dessin non-critiques (MS1, MS3, MS5) sur base de la saisie de la position relative par le dispositif de saisie optoélectronique (23 à 27), et
-- commander le dispositif d'entraînement (2) pour les segments de dessin critiques (MS2, MS4) sur base des valeurs de déplacement relatif mémorisées pour le déplacement relatif de la tête de coupe (10) en partant de la position de la tête de coupe (10) après avoir atteint le point final du segment de dessin non-critique (MS1, MS3) précédent.

2. Procédé suivant la revendication 1, caractérisé en ce que les valeurs relatives sont chaque fois des nombres d'impulsions pour les impulsions de commande d'un moteur pas-à-pas du dispositif d'entraînement (2) de la tête de coupe (10).

3. Procédé suivant la revendication 1 ou 2, caractérisé par les étapes de procédé suivantes consistant à:
- capter des opérations d'inversion de mouvement de la tête de coupe (10) après chaque segment de dessin (MS1, ..., MS5),
- compter le nombre de segments de dessin sur base du nombre d'opérations d'inversion de mouvement détectées, et
- commuter de la commande du dispositif d'entraînement (2) pour les segments de dessin non-critiques sur la commande du dispositif d'entraînement (2) pour les segments de dessin critiques en fonction de la situation du compteur.

4. Procédé suivant l'une des revendications 1 à 3, caractérisé en ce que la commande du dispositif d'entraînement (2) pour les segments de dessin critiques comporte la réduction de la vitesse d'entraînement de la bande textile (TB) dans la direction de déroulement (LR) à partir d'un point déterminé dans le dessin critique.

5. Procédé suivant l'une des revendications 1 à 4, caractérisé en ce que la commande du dispositif d'entraînement (2) pour les segments de dessin critiques comporte l'inversion de la direction d'entraînement de la bande textile (TB), dans le sens de déroulement (LR), à partir d'un point déterminé dans le dessin critique.

6. Procédé suivant l'une des revendications 1 à 5, caractérisé en ce que la commande du dispositif d'entraînement (2) pour les segments de dessin critiques comporte l'arrêt de la bande textile (TB) à un point déterminé dans le dessin critique.

7. Procédé suivant l'une des revendications 1 à 6, caractérisé en ce qu'il est mémorisé une pluralité de valeurs de mouvement relatif pour les segments de dessin critiques.

8. Dispositif à découper en courbe une bande textile, avec
- une tête de coupe (10) portant un moyen de coupe (20),
- un dispositif d'entraînement (2) destiné à déplacer la tête de coupe (10) sensiblement perpendiculairement à une direction de déroulement (LR) de la bande textile (TB), et
- un dispositif de saisie optoélectronique (23 à 27) destiné à capter la position de la tête de coupe (10) par rapport à la bande textile (TB) et à commander le dispositif d'entraînement (2) de telle manière qu'est découpée la courbe souhaitée,
caractérisé en ce
- que le dispositif de saisie optoélectronique destiné à capter la position de la tête de coupe (10) par rapport à une clairière (LS) de la bande textile (TB) comporte au moins deux cellules photoélectriques (24, 26; 23, 27) qui sont disposées de sorte que les faisceaux de lumière qu'elles déterminent coupent le plan de la bande textile (TB) en au moins deux points lumineux (L1, L2),
- que l'une (24, 26) des cellules photoélectriques (24, 26; 23, 27) est disposée de telle manière que le premier point lumineux (L1) qu'elle détermine présente, par rapport à un axe (A) s'étendant, dans le sens de déroulement de la bande textile (TB), par le point de coupe (SP) du moyen de coupe (20), une première distance verticale (a1) supérieure à la seconde distance verticale (a2) que présente, par rapport à cet axe (A), le second point lumineux (L2) déterminé par l'autre cellule photoélectrique (23, 27),
- que le dispositif de saisie (23, 27) déplace le dispositif d'entraînement, en fonction de l'état d'interruption de l'autre cellule photoélectrique (23, 27), dans une première direction vers une zone tissée (11) de la bande textile (TB) ou dans une seconde direction opposée à la première direction, et
- que le dispositif de saisie (23 à 27) met la commande du dispositif d'entraînement (2) hors service, du moins dans la première direction vers la zone tissée (11), en fonction de l'état d'interruption de l'autre cellule photoélectrique (23, 27), pendant un laps de temps prédéterminé et/ou pendant un trajet de déroulement prédéterminé de la bande textile (TB), dans le sens de déroulement (LR), lorsque la première cellule photoélectrique (24, 26) n'est pas interrompue.

9. Dispositif à découper en courbe suivant la revendication 8, caractérisé en ce
- que le dispositif de saisie (23 à 27) commande le dispositif d'entraînement (2) de telle manière que la tête de coupe (10) est déplacée, en cas de non-interruption de l'autre cellule photoélectrique (23, 27), dans la première direction vers la zone tissée (11) de la bande textile (TB), jusqu'à ce que le second point lumineux (L2) déterminé par l'autre cellule photoélectrique (23, 27) quitte la clairière (LS) et que l'autre cellule photoélectrique (23, 27) est interrompue, et que la tête de coupe (10) est, en cas d'interruption de l'autre cellule photoélectrique (23, 27), éloignée, dans une seconde direction opposée à la première direction, de la zone tissée (11) de la bande textile (TB), jusqu'à ce que l'autre cellule photoélectrique (23, 27) n'est plus interrompue.

10. Dispositif à découper en courbe suivant la revendication 8 ou 9, caractérisé en ce
- que la tête de coupe (10) comporte un bloc de tête de coupe supérieur (13) et un bloc de tête de coupe inférieur (14),
- que le bloc de tête de coupe supérieur (13) est relié au dispositif d'entraînement (2) à l'aide d'un bras de guidage (18), et
- que le bloc de tête de coupe inférieur (14) est fixé au bloc de tête de coupe supérieur (13) à l'aide d'un élément de fixation (15) agissant comme coin de séparation de la bande textile découpée.

11. Dispositif à découper en courbe suivant l'une des revendications 8 à 10, caractérisé en ce que le coin de séparation que constitue l'élément de fixation (15) par rapport à la bande textile (TB) est disposé derrière le point de coupe (SP) et décalé, par rapport à l'axe (A) passant, dans le sens de déroulement (LR), par le point de coupe (SP), d'une troisième distance (a3) en direction de la bande textile déchet (12) découpée de la bande textile (TB).

12. Dispositif à découper en courbe suivant l'une des revendications 8 à 11, caractérisé en ce que le moyen de coupe est un filament (20) tendu entre les blocs de tête de coupe (13, 14).

13. Dispositif à découper en courbe suivant l'une des revendications 8 à 12, caractérisé en ce que le moyen de coupe est un faisceau laser ou une source de lumière laser.

14. Dispositif à découper en courbe suivant l'une des revendications 8 à 13, caractérisé en ce que chaque cellule photoélectrique (24, 26; 23, 27) est constituée d'un élément émetteur (26, 27) dans l'un (13) des blocs de tête de coupe et d'un élément récepteur (23, 24) dans l'autre bloc de tête de coupe (14).

15. Dispositif à découper en courbe suivant l'une des revendications 8 à 14, caractérisé en ce que les cellules photoélectriques (24, 26; 23, 27) sont disposées de telle manière que les faisceaux de lumière qu'elles génèrent sont disposés inclinés réciproquement, suivant un angle par rapport à la verticale, sur le plan de la bande textile (TB), de telle manière que la distance entre les points lumineux (L1, L2) est inférieure à la distance entre les éléments photoémetteurs ou photorécepteurs (23 à 27) adjacents des cellules photoélectriques.
